Europäisches Patentamt

European Patent Office

Office européen des brevets

(11) Veröffentlichungsnummer: **0 158 060**
**B1**

(12) **EUROPÄISCHE PATENTSCHRIFT**

(45) Veröffentlichungstag der Patentschrift:
**28.10.87**

(51) Int. Cl.⁴: **C 08 G 65/30**

(21) Anmeldenummer: **85101812.7**

(22) Anmeldetag: **20.02.85**

(54) Verfahren zur Verminderung des Gehaltes an oligomeren cyclischen Ethern in Polyoxibutylen-polyoxialkylenglykolen.

(30) Priorität: **28.02.84 DE 3407183**

(43) Veröffentlichungstag der Anmeldung:
**16.10.85 Patentblatt 85/42**

(45) Bekanntmachung des Hinweises auf die Patenterteilung:
**28.10.87 Patentblatt 87/44**

(84) Benannte Vertragsstaaten:
**BE DE FR GB IT NL**

(56) Entgegenhaltungen:
**GB - A - 854 958**
**US - A - 4 251 654**

**PATENTS ABSTRACTS OF JAPAN, Band 1, Nr. 140, 16. November 1977, Seite 3041C77; & JP - A - 52 86 499 (NIPPON YUSHI K.K.) 18.07.1977**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Mueller, Herbert, Dr., Carostrasse 53,
D-6710 Frankenthal (DE)**

**Beschreibung**

Die Erfindung betrifft ein Verfahren zur Reduzierung des Anteils oligomerer cyclischer Ether in Copolymerisaten aus Tetrahydrofuran und Alkylenoxiden.

In der GB-PS 854 958 wird ein Verfahren zur Copolymerisation von Tetrahydrofuran und 1,2-Alkylenoxiden beschrieben, das man in Gegenwart von Verbindungen mit reaktivem Wasserstoff und unter dem katalytischen Einfluss von Bleicherden durchführt. Der Hauptnachteil dieses Verfahrens ist der Zwangsanfall verhältnismässig grosser Mengen an niedermolekularen Produkten. Der Anteil an diesen unerwünschten Nebenprodukten, die zum überwiegenden Teil aus oligomeren cyclischen Ethern bestehen, im Copolymerisat kann 10 bis 18 Gew.-% ausmachen (s. US-PS 4 127 513, Spalte 1, Zeilen 25 bis 26 und EP-PS 6 107, Seite 2, Zeilen 7 bis 12). Die Verunreinigung der Copolymerisate mit diesen oligomeren cyclischen Ethern ist aus mehreren Gründen unerwünscht. Da es sich bei den Verunreinigungen um inertes Material handelt, und die Copolymeren hauptsächlich für die Herstellung von Polyurethanen verwendet werden, setzt dieses Inertmaterial z.B. das mechanische Niveau der Fertigprodukte herab. Die Oligomeren können auch an der Oberfläche der Fertigprodukte ausschwitzen oder von Lösungsmitteln herausgelöst werden, wodurch z.B. die Formstabilität der Fertigprodukte beeinträchtigt wird.

Es hat deshalb nicht an Versuchen zu einer Reduzierung des Gehaltes an oligomeren cyclischen Ethern in Copolymerisaten aus Tetrahydrofuran und Alkylenoxiden gefehlt. So wird in der US-PS 4 127 513 der Vorschlag gemacht, einen besonders aktivierten Montmorilloniten als selektiveren Katalysator für die Polymerisation zu verwenden, der durch eine Aktivierung der Bleicherde mit höher konzentrierter Säuren erhalten wird. Bei diesem Verfahren ist aber von Nachteil, dass Polymerisate mit hohen Farbzahlen entstehen, die Polymerisationsgeschwindigkeit verhältnismässig gering ist und immer noch Copolymerisate mit einem Gehalt von 5 bis 6 Gew.-% an oligomeren cyclischen Ethern gebildet werden. Nach den Angaben der US-PS 4 228 272 verwendet man als Katalysator für die Copolymerisation von Alkylenoxiden mit Tetrahydrofuran Bleicherden mit einem bestimmten spezifischen Porenvolumen, einer definierten Katalysatoroberfläche und einem definierten Porendurchmesser. Dieses Verfahren soll Produkte mit verbesserter Farbzahl bei erhöhter Polymerisationsgeschwindigkeit liefern. Auch diese Copolymere enthalten z.B. 4 Gew.-% oligomere cyclische Ether (s. Spalte 5, Zeilen 14 und 15). Dieser Oligomerengehalt ist für die Anwendung der Polymeren zur Herstellung von Polyurethanen, an die höhere mechanische Ansprüche gestellt werden, immer noch zu hoch.

In der EP-PS 6 107 wird ein Verfahren zur Verminderung des Gehaltes an oligomeren cyclischen Ethern in Copolymerisaten aus Tetrahydrofuran und Alkylenoxiden beschrieben. Bei dieser Methode werden die cyclischen Ether mit Hilfe einer säureaktivierten Bleicherde depolymerisiert. Dabei werden die cyclischen Ether in Tetrahydrofuran, Wasser und verschiedene Nebenprodukte umgewandelt. Bei diesem Verfahren besteht die Gefahr, dass auch die offenkettigen Glykole, also die gewünschten Alkylenoxidcopolymere, depolymerisiert werden, sobald zu hohe Temperaturen oder zu lange Reaktionszeiten gewählt werden. Das ist immer dann der Fall, wenn man den Gehalt an oligomeren cyclischen Ethern möglichst vollständig entfernen will. Ausbeuteverluste und die Bildung gefärbter Polymerisate sind dann nicht auszuschliessen.

Nach den Angaben der US-PS 4 251 654 wird der Gehalt an oligomeren cyclischen Ethern in Copolymerisaten aus Tetrahydrofuran und Alkylenoxiden dadurch reduziert, dass man die Ether aus den Copolymerisaten durch eine Behandlung mit Wasser extrahiert. Es wird darauf hingewiesen, dass man den Gehalt an oligomeren Ethern auch durch eine Vakuumdestillation der Copolymerisate bei 95 bis 250°C auf 3% oder darunter vermindern kann. Nach Beispiel 2 der US-PS 4 251 654 erhält man durch eine 4stündige Vakuumdestillation bei 208°C ein Copolymerisat mit einem Restgehalt an oligomeren cyclischen Ethern von 4,5%, zu dessen weiterer Verminderung noch eine Extraktion mit Wasser angeschlossen wird.

Es wurde nun gefunden, dass man den Gehalt an oligomeren cyclischen Ethern in Polyoxibutylen-polyoxialkylenglykolen besonders wirksam vermindern kann, wenn man Copolymerisate, die man durch Copolymerisation von Tetrahydrofuran mit einem 1,2-Alkylenoxid in Gegenwart von Verbindungen mit reaktivem Wasserstoff unter dem katalytischen Einfluss von Bleicherden erhalten hat, zur destillativen Abtrennung von oligomeren cyclischen Ethern einer Vakuumdestillation bei höheren Temperaturen unterwirft, wobei man die Copolymerisate erfindungsgemäss vor der Vakuumdestillation bei Temperaturen von 20 bis 110°C mit Sauerstoff behandelt, indem man Sauerstoff oder Sauerstoff enthaltende Gase einleitet, wobei man pro 1000 Gew.-Teile Copolymerisat 1 bis 8 Gew.-Teile Sauerstoff anwendet, und danach die Vakuumdestillation bei Temperaturen über 200°C vornimmt.

Nach dem neuen Verfahren vermindert man den Gehalt an oligomeren cyclischen Ethern in Polyoxibutylen-polyoxialkylenglykolen, die auf an sich bekannte Weise durch Copolymerisation von Tetrahydrofuran mit einem 1,2-Alkylenoxid in Gegenwart von Verbindungen mit reaktivem Wasserstoff und von Bleicherden erhältlich sind. Zur Herstellung dieser Copolymerisate verwendet man als 1,2-Alkylenoxide unsubstituierte oder substituierte Alkylenoxide, die als Substituenten z.B. lineare oder verzweigte Alkylengruppen mit 1 bis 6, vorzugsweise 1 bis 2 C-Atomen, Phenylreste, durch Alkyl- und/oder Alkoxigruppen mit 1 bis 2 C-Atomen oder Halogenatomen substituierte Phenylreste oder Halogenatome, vorzugsweise Chloratome enthalten können. Das sind z.B. 1,2-Butylenoxid, 2,3-Butylenoxid, Styroloxid, Epichlorhydrin und vorzugsweise Ethylenoxid und 1,2-Propylenoxid. Die 1,2-Alkylenoxide können einzeln oder in Form von Mischungen, beispielsweise als ein Gemisch aus Ethylenoxid und 1,2-Propylenoxid, verwendet werden.

Verbindungen mit reaktivem Wasserstoff sind beispielsweise Wasser, ein- und mehrwertige Alkohole, wie Methanol, Ethanol, Propanol, Ethylenglykol, Butylenglykol, Glycerin, Neopentylglykol und Butandiol sowie insbesondere Carbonsäuren mit z.B. 1 bis 8 C-Atomen, vor allem Ameisensäure, Essigsäure und Propionsäure.

Die als Katalysatoren bei der Copolymerisation verwendeten Bleicherden werden z.B. in Ullmann's Enzyklopädie der technischen Chemie, 3. Auflage, Bd. IV, Seiten 541 bis 545 beschrieben. Es sind natürliche oder synthetische Bleicherden, wie Aluminiumhydrosilikate oder Aluminiummagnesiumhydrosilikate vom Typ des Montmorillonits, die durch Säure aktiviert sein können und z.B. unter der Bezeichnung «®Tonsil» im Handel erhältlich sind. Synthetische Bleicherden werden z.B. in der GB-PS 854 958 beschrieben.

Copolymerisiert wird z.B. in einem fest angeordneten Katalysatorbett bei Temperaturen von 0 bis 50°C, vorzugsweise zwischen 20 und 45°C und bei Normaldruck. Die Polymerisation mit in der flüssigen Phase suspendiertem Katalysator ist ebenfalls möglich. Das Molverhältnis zwischen Tetrahydrofuran und Alkylenoxid liegt zwischen den Werten 20 zu 1 und 1 zu 20. Die Konzentration der Verbindung mit aktivem Wasserstoff im Ausgangsgemisch liegt z.B. bei 0,5 bis 15 Mol-%.

Die Copolymerisationsprodukte werden erfindungsgemäss einer Vakuumdestillation bei Temperaturen über 200°C unterworfen. Man destilliert vorzugsweise bei Temperaturen von 210 bis 250°C und bei einem Vakuum von 2 bis 0,2 hPa.

Für die praktische Durchführung der destillativen Abtrennung der oligomeren cyclischen Ether kann man die gebräuchlichen Vakuumdestillationseinrichtungen verwenden. Z.B. kann absatzweise aus einer Blase ohne Rektifikation destilliert werden. Zweckmässiger sind sogenannte Kurzwegdestillationen, wie sie z.B. als Filmverdampfer mit mechanischer Oberflächenverteilung oder selbsttätiger Verteilung bekannt sind. Bei den Filmverdampfern wird man im allgemeinen die kontinuierliche Fahrweise bevorzugen, während man bei Blasendestillation in den meisten Fällen diskontinuierlich arbeiten wird. Auch sogenante Flash-Verdampfer sind für die Abtrennung der oligomeren cyclischen Ether geeignet. Bei diesen Apparaten wird die erforderliche Verdampfungsenergie in Form von fühlbarer Wärme in das Reaktionsprodukt hineingebracht und danach in einen geeigneten Vakuumbehälter entspannt. Dabei verdampfen die darin enthaltenen cyclischen oligomeren Ether. Die Destillation kann durch zusätzliches Strippen mit inerten Gasen, wie Stickstoff oder überhitztem Wasserdampf, unterstützt werden.

Die Verweilzeit der Copolymerisate bei der Destillationstemperatur kann zwischen 0,05 bis 5 Stunden, bevorzugt 0,1 bis 2 Stunden betragen.

Nach dem erfindungsgemässen Verfahren werden die Copolymere vor der Vakuumdestillation bei Temperaturen von 20 bis 110°C mit Sauerstoff oder sauerstoffhaltigen Gasen durch Einleiten behandelt. Dabei werden pro 1000 Gew.-Teile Polymerisat 1 bis 8, vorzugsweise 2 bis 4 Gew.-Teile Sauerstoff angewedet.

Nach dem erfindungsgemässen Verfahren lassen sich aus den Copolymerisaten, die üblicherweise einen Gehalt an oligomeren, cyclischen Ethern von etwa 10 bis 20 Gew.-% aufweisen, die unerwünschten oligomeren cyclischen Ether auf besonders einfache Weise nahezu vollständig abdestillieren, ohne dass die copolymeren Glykole thermisch abgebaut werden. Dieses vorteilhafte Ergebnis konnte nicht erwartet werden, da Polytetrahydrofuran sowie Polytetrahydrofuran-Copolymere als thermisch nicht stabil und als sehr oxidationsempfindlich gelten. So wird z.B. in «Die Makromolekulare Chemie» 81 (1965), Seiten 38 bis 50 der thermische Abbau von Polytetrahydrofuran bei verschiedenen Temperaturen beschrieben. Dabei wurden Polymere verwendet, die entweder in Gegenwart von Luftsauerstoff oder im Vakuum polymerisiert wurden. Beide Polymerisate bauten oberhalb von 150°C ab. Wurden die Polymerisate in Gegenwart von Luft thermischer Behandlung ausgesetzt, so zersetzten sie sich vollständig. Auch im Handel befindliche Polytetramethylenetherglykole zersetzen sich oberhalb 210°C. Versucht man entsprechend den Angaben in der GB-PS 854 958 die oligomeren cyclischen Ether durch eine Vakuumdestillation bei Temperaturen unter 200°C zu entfernen, so erhält man erheblich schlechtere Ergebnisse (s. das Vergleichsbeispiel 2).

Die nach dem erfindungsgemässen Verfahren erhältlichen Copolymerisate, insbesondere solche von Molekulargewichten zwischen 500 und 5000, sind für die Herstellung von Polyurethanen oder Polyester hervorragend geeignet. Man erhält aus ihnen Fertigpolymerisate von hohem mechanischem Niveau bei guter Kältefestigkeit, Mikroben- und Verseifungsbeständigkeit.

Die folgenden Beispiele sollen das erfindungsgemässe Verfahren näher erläutern. Die genannten Teile sind Gewichtsteile, sie verhalten sich zu Volumenteilen wie Kilogramm zu Litern.

*Beispiel 1*

Marktgängiges technisches Tetrahydrofuran wurde nach Beispiel 1 der EP-OS 3 112 gereinigt und für die Copolymerisation verwendet.

Aus der im Handel unter der Bezeichnung ®Tonsil Optimum FF der Süd-Chemie AG, München, erhältlichen Bleicherde wurden Strangpresslinge mit einem Durchmesser von 2 bis 3 mm und einer durchschnittlichen Länge von 4 mm hergestellt und 4 Stunden bei 200°C getrocknet.

250 Volumenteile der Bleicherdesträngen wurden in einen thermostatisierten Rührbehälter mit einer Grösse von 1000 Volumenteilen eingefüllt. Unter Rühren wurden dann 700 Volumenteile einer Lösung aus 73 Teilen Tetrahydrofuran, 20 Teilen Propylenoxid und 7 Teilen Butandio-1,4 zugegeben. Unter weiterem Rühren wurde mit Hilfe eines Thermostaten die Temperatur 25 Stunden auf 30°C eingestellt. Danach wurde die Polymerisatlösung vom Katalysator durch Filtration getrennt. Das entstande Reaktionsprodukt bestand aus 44 Gew.-% Tetrahydrofuran und 56 Gew.-% eines Copolymeren aus Tetrahydrofuran und Propylenoxid, das etwa 35 bis 40 Gew.-% Oxipropyl-Gruppen enthielt. Das Polyetherglykol hatte ein Molekulargwicht, berechnet aus der Hydroxylzahl, von 1200. Bei der Polymerisation waren Propylenoxid und Butandiol-1,4 vollständig umgesetzt.

Das von Restmonomeren vollständig befreite Copolymerisat wurde anschliessend bei 80°C in der Weise mit Luft behandelt, dass auf 1000 Teile des Polymerisats 5 Volumenteile Luft durch Einleiten über eine Fritte zur Einwirkung kamen. Anschliessend wurden die flüchtigen oligomeren cyclischen Ether durch Vakuumverdampfung in einem Rotationsfilmverdampfer bei einer Temperatur von 220°C und unter einem Vakuum von 2 mbar abdestilliert. Die destillierte Menge betrug 7 Gew.-%, bezogen auf das eingesetzte Copolymerisat. Das Destillat bestand zu 80% aus oligomeren cyclischen Ethern, die aus 1 bis 3 Oxipropyl- bzw. 1 bis 3 Oxibutyl-Gruppierungen cyclisch aufgebaut waren. Das den Rotationsfilmverdampfer verlassende Copolymerisat erwies sich als hervorragend geeignet für die Herstellung von Polyestern oder Polyurethanen von hohem mechanischem Niveau.

Ein ähnliches Ergebnis wurde erhalten, wenn anstelle von Propylenoxid die äquivalente Menge Ethylenoxid für die Copolymerisation verwendet wurde.

*Beispiel 2 (Vergleichsbeispiel)*

Das nach Beispiel 1 erhaltene von Restmonomeren vollständig befreite Copolymerisat wurde in einem Rotationsverdampfer einer Vakuumdestillation bei einer Temperatur von 180°C und einem Vakuum von 2 mbar unterworfen. Die destillierte Menge betrug 2,6 Gew.-%.

Aus dem so gereinigten Copolymerisat wurden durch Umsetzung mit 2,4-Toluendiisocyanat und Butandiol wie üblich Giesselastomere hergestellt. Dabei wurden Formkörper erhalten, die auf der Oberfläche einen öligen Film aufwiesen, der jeweils einige Zeit nach Entfernung mit Hilfe eines Lösungsmittels immer wieder sichtbar wurde.

Bei Formkörpern, die auf entsprechende Weise unter Verwendung des nach Beispiel 1 erhaltenen Copolymerisates hergestellt wurden, konnte das Ausschwitzen eines öligen Films an der Oberfläche nicht beobachtet werden.

**Patentansprüche**

1. Verfahren zur Verminderung des Gehaltes an oligomeren cyclischen Ethern in Polyoxibutylen-polyoxialkylenglykolen, bei dem man Copolymerisate, die man durch Copolymerisation von Tetrahydrofuran mit einem 1,2-Alkylenoxid in Gegenwart von Verbindungen mit reaktivem Wasserstoff unter dem katalytischen Einfluss von Bleicherden erhalten hat, zur destillativen Abtrennung von oligomeren cyclischen Ethern einer Vakuumdestillation bei höheren Temperaturen unterwirft, dadurch gekennzeichnet, dass man die Copolymerisate vor der Vakuumdestillation bei Temperaturen von 20 bis 110°C mit Sauerstoff behandelt, indem man Sauerstoff oder Sauerstoff enthaltende Gase einleitet, wobei man pro 1000 Gew.-Teile Copolymerisat 1 bis 8 Gew.-Teile Sauerstoff anwendet, und danach die Vakuumdestillation bei Temperaturen über 200°C vornimmt.

2. Verfahren nach Anspruch 1, dadurch gekennzeichnet, dass man die Vakuumdestillation bei Temperaturen von 210 bis 250°C vornimmt.

**Claims**

1. A process for reducing the content of oligomeric cyclic ethers in a polyoxybutylene polyoxyalkylene glycol, in which a copolymer obtained by copolymerization of tetrahydrofuran with a 1,2-alkylene oxide in the presence of a compound containing reactive hydrogen, under the catalytic action of a bleaching earth, is subjected to vacuum distillation at elevated temperature in order to remove the oligomeric cyclic ethers, characterized in that, prior to the vacuum distillation, the copolymer is treated with oxygen at from 20 to 110°C by passing in oxygen or an oxygen-containing gas, from 1 to 8 parts by weight of oxygen being used per 1000 parts by weight of copolymer, and the vacuum distillation is then carried out at above 200°C.

2. A process as claimed in claim 1, characterized in that the vacuum distillation is carried out at from 210 to 250°C.

**Revendications**

1. Procédé pour diminuer la teneur en éthers cycliques oligomères de polyoxybutylène-polyoxyalkylène glycols, selon lequel, en vue de séparer par distillation les éthers cycliques oligomères, on soumet les copolymères qui ont été obtenues par copolymérisation du tétrahydrofuranne avec un oxyde de 1,2-alkylène en présense de composés contenant de l'hydrogène réactif sous l'influence catalytique de terre ou argile décolorante, à une distillation sous vide à des températures élevées, caractérisé en ce que l'on traite les copolymères, avant la distillation sous vide, par de l'oxygène à des températures de 20 à 110°C, opération en vue de laquelle on introduit de l'oxygène ou des gaz contenant de l'oxygène en utilisant de 1 à 8 parties en poids d'oxgène pour 1000 parties en poids de copolymère et on entreprend ensuite la distillation sous vide à des températures supérieures à 200°C.

2. Procédé suivant la revendication 1, caractérisé en ce que l'on entreprend la distillation sous vide à des temératures de 210 à 250°C.